# EUROPEAN PATENT SPECIFICATION

(11) **EP 1 688 044 B1**
(45) Date of publication and mention of the grant of the patent: **01.02.2012**
(21) Application number: 05388011.8
(22) Date of filing: 08.02.2005
(51) Int. Cl.: A23D 7/00

(54) **A butter-like dairy spread and method for production**
Butterähnlicher Brotaufstrich und Verfaren zur Herstellung
Pâté à tartiner semblable au beurre et procédé de préparation

(43) Date of publication of application: 09.08.2006
(60) Divisional application: 10185997.3
(73) Proprietor: Dragsbaek A/S, DK-7700 Thisted (DK)
(72) Inventor: Nielsen, Mogens, DK-7700 THISTED (DK); Olsen, Peter B., Thorsted, DK-7700 THISTED (DK); Rokkedahl, Kjeld, Kallerup, DK-7700 THISTED (DK); Thorning, Peter F., Helsted, DK-8900 RANDERS (DK)
(74) Representative: Indahl, Peter Jensen

(56) References cited:
- EP-A- 1 279 338
- WO-A-89/10700
- WO-A-99/43218
- WO-A-99/51105
- WO-A1-99/43218
- AU-B2- 529 036
- US-A- 4 209 546
- US-A- 4 298 625
- US-A- 6 083 548
- US-A- 6 083 548
- US-A- 6 136 349

## Description

The present invention relates to a butter-like dairy spread comprising at least butter, edible vegetable fat, and a taste ingredient, and a method for producing such a dairy spread.

Dairy spreads based on butter mixed with vegetable oils are well-known and highly appreciated as such. Dairy spreads, in contrast to butter, are sufficiently soft to be spread unproblematic on e.g. sliced bread, directly from a refrigerator (temperature of about 4-6°C). Thus, due to their easy use there is a growing demand after such dairy spreads based on butter mixed with vegetable oils.

Several documents such as WO 99/43218, US 6,136,349, EP 1279338, AU 529036, and US 4,298,625 also relate to dairy spread. However, none of these documents describe a butter-like spread comprising a taste ingredient, which includes water, skimmed milk-powder, salt, and one or more cultures of lactic bacteria.

WO 99/51105 also relates to clairy spreads, however, it does not disclose a solid fat content of the edible vegetable fat between 20 and 45% and a solid fat content of the butter like dairy fat of at least 15% at 20°C.

AU-B-49373/79 discloses a spreadable butterfat-rich product, which is produced by adding an edible fat or oil to a butterfat product resulting from churning of cream or from subjecting cream to a butter-making operation, where the edible fat or oil is dispersed through the butterfat product by a working operation which operation is such as to generate shear rates in excess of 50 sec⁻¹.

A similar process is known from DK 171699 B1, which discloses a method for producing a butter-like food fat being directly spreadable at refrigeration temperature (4 to 5°C). Preferably the butter-like food fat containing 80 to 83% fat is produced by addition of vegetable oil, water, and salt. Initially conventional butter is produced, which preferably contains 80 to 83% fat and which is made exclusively from milk. Subsequently, the conventional butter is passed continuously through a tight, closed plant, whereby the butter initially passes through a kneading station followed by addition of half the total amount of added vegetable oil. Then the butter mixture passes through a mixer, whereafter the remaining portion of the amount of added vegetable oil and water and salt are added.

However, the known types of spreads based on butter mixed with vegetable oils or fats suffer from the drawback that they are not particularly stable at room temperature. When dairy spreads are used, after a while at room temperature an oily substance will exude to the surface of the spread, which in the view of consumers is unappetizing. When refrigerated after such an exuding of oily substance the spread will not regain its butter-like appearance.

The object of the present invention is to provide a butter-like dairy spread, which is more stable, even after being kept at prolonged periods at room temperature.

The present invention provides a method for producing a butter-like dairy spread comprising at least butter, edible vegetable fat, and a taste ingredient, in which the edible vegetable fat has a solid fat content of 45% or less at 20°C, the edible vegetable fat is mixed with at least butter and taste ingredient at a temperature below 22°C during the production of the butter-like dairy spread, and wherein the taste ingredient includes water, skimmed milk-powder, salt, and one or more cultures of lactic bacteria.

The butter-like dairy spread produced by the present invention is spreadable when taken directly from a refrigerator, and convenient to use. The butter-like dairy spread according to the invention keeps its butter-like characteristics and appearance, even after long time at room temperature (approx. 20-23°C). Moreover, the butter-like dairy spread provides an excellent mouth-feel and taste experience for the consumer and, therefore, provides a good alternative for butter, as it may contain lesser fat and a part of the fat present is vegetable fat, which is considered healthier than animal fat. I

It is believed that the careful mixing of the butter with vegetable fat and taste ingredient at a temperature below 22°C, preferably a temperature below 20°C, provides for the excellent properties of the butter-like dairy spread according to the invention, partly due to the fact that the complex crystal structure of the vegetable fat and the butter is substantially maintained during mixing. Thus, a crystallisation step after mixing is not required.

Moreover, it has unexpected appeared that it is possible to mix all the components of the butter-like dairy spread in one single mixing step and, consequently, avoid stepwise addition and mixing of the components. A stepwise procedure would, of course, be possible but not desirable due to the requirements of further mixers, pipes etc.

In the context of this invention preferably no more than 45% of the edible vegetable fat is in solid form at 20°C (measured according to IUPAC 2.150a) when the vegetable fat is mixed with butter and taste ingredient(s) and optionally other ingredients. Thus the vegetable fat has a solid appearance, without being to hard, If the amount of solid fat content in the edible vegetable fat is to high at normal room temperatures the butter-like dairy spread will not be readily spreadable. The solidification is preferably obtained by relatively rapid cool and kneading vegetable fat from an elevated temperature above the melting point of the fat to a temperature below the melting point of the fat, causing at least a part of the fat to solidify. When the vegetable fat is produced this way, it is in normal dairy terminology denoted crystallized fat even though not all of the fat is present as solid fat or fat crystals. The optionally remaining non-solid or non-crystalline parts of the vegetable fat may be in a semi-solid amorphous phase or liquid phase, optionally as droplets of fat dispersed within the solid fat. It is believed that at least 10 or suitable 15% crystalline fat is sufficient to form a complex network of fat crystals, which will keep the fat connected with a solid or semi-solid appearance, very similar to the appearance of butter at the same temperature. Preferably at least 20%, more preferred 25% of the vegetable fat is on crystalline form during the production of the butter-like diary spread at a temperature below 22°C. Conveniently, at least 30% of the vegetable fat is on crystalline form during the production of the butter-like diary spread at a temperature below 22°C. The solidification or crystallization of the vegetable fat may be performed in connection with the production of the butter-like dairy spread. Alternatively vegetable fat, which has been crystallized in advance and stored may be used and mixed with the butter, taste ingredient(s) and optionally other ingredients. The optimal conditions suitable for solidifying or crystallizing a certain type of vegetable fat can be determined by the skilled person by use of routine experiments.

By keeping the temperature below 22°C a satisfactory solid fat content or crystallization of the edible vegetable fat is maintained during the mixing process. The gentle mixing caused by keeping the temperatures below 22°C ensures that no undesired melting of fat crystals appears, either in the vegetable fat or in the butter. The edible vegetable fat with a solid fat content of no more than 45% at 20°C gives the butter-like dairy spread a texture of sufficient softness, so that the butter-like dairy spread is spreadable at temperatures around 5°C, and yet still stable at temperatures around 20°C. The solid fat content of the vegetable fat is at least 10% or suitable 15% at 20°C, which will provide the vegetable fat with a solid or semi-solid appearance, very similar to the appearance of butter at the same temperature. Preferably the solid fat content of the vegetable fat is at least 20%, more preferred 25%, even more preferred at least 30% at 20°C when measured according to IUPAC 2.150a.

The taste ingredient may comprise rather large amounts of water, which is admixed to the edible vegetable fat and the butter. However, the amount of water is sufficiently low to allow the mixing into the resulting butter-like dairy spread without any use of emulsifying agents. The taste ingredient is a skimmed-milk powder dissolved in water, comprising salt and one or more cultures of lactic bacteria to improve the taste. In this manner the taste ingredient is of natural origin and highly compatible with the butter and vegetable fat.

In a preferred embodiment of the method according to the invention the edible vegetable fat is supplied on liquid form at a temperature in the range of 42-60°C, suitable in the range of 45-55°C, and rapidly cooled prior to mixing to a temperature in the range of 7-18°C, suitably 10-15°C to crystallize or at least partly solidify the edible vegetable fat. The supply of edible fat on liquid form eases the handling of the fat before its use for the butter-like dairy spread. Moreover, it allows the manufacturer of the butter-like dairy spread more control over the crystallization or solidification of the edible vegetable fat, which is highly advantageously in respect of e.g. quality control. Preferably the edible vegetable fat is cooled within a period of time in the range from about 15 seconds to about 15 minutes, preferably within a period of time in the range from about 15 seconds to about 7 minutes in order to optimise the crystallization. Preferably the vegetable fat is essentially free of water. However, it is in a non-preferred embodiment possible to mix water to the fat in liquid form and form an emulsion of fat and water. The vegetable fat may be mixed with up to about 30-50% of water.

According to the above preferred embodiment the cooled edible vegetable fat is post-crystallized at a temperature in the range of 8-18°C, suitable in the range of 10-15°C for a predetermined period of time of at least 30 seconds, preferably a period of time in the range from 2 min to 30 min, conveniently for a period of time in the range 4 min to 18 min, prior to the mixing with butter, taste ingredient and optional other ingredients. This procedure ensures a sufficient degree of solidification or crystallization for the formation of the network of crystals to provide the vegetable fat with a solid appearance. Preferably the edible vegetable fat is crystallized and post-crystallized within a period of time in the range from 2 to 30 min, more preferred within a period of time in the range from 3 to 20 min. to optimise the process.

In order to obtain the best possible properties of the butter-like dairy spread according to invention it is preferred that the edible fat has a solid fat content when measured according to IUPAC 2.150a in the following range:

| | |
|---|---|
| solid fat content at 10°C | 50-70% |
| solid fat content at 20°C | 30-45% |
| solid fat content at 30°C | 10-20% |
| solid fat content at 40°C | <3% |

A vegetable edible fat with such a melting profile provides the resulting spread with a rheological behaviour substantially like soft butter, and the vegetable fat appears to be in a solid form at normal room temperatures (18-25°C), although it may comprise major liquid and/or semi-solid phases. However, the crystallized edible fat can have other solid fat contents than the stated ones, e.g. up to 10% higher contents and/or 5% lower, at one or more of the mentioned four temperature ranges. Due to variation of the butter during the year, the butter may have varying hardness, which can be compensated with more "soft" fat or more "hard" fat, respectively. The "hardness" of the fat is correlated to the solid fat content. Preferably the edible vegetable fat melts in the temperature range 33-48°C, preferably in the temperature range 35-45°. Vegetable fats that melts in such temperature range has proven to be very suitable and provide excellent properties, e.g. in respect of softness and spreadability to the dairy product.

For the purpose of improving the quality of the butter-like dairy spread in respect of consumer health it is preferred that the edible vegetable fat is substantially free of trans fatty acids. At present it is recognized that trans fatty acids has a negative effect on human health by increasing the level of harmful cholesterol in blood and the risk of heart diseases.

Moreover, to provide a balanced mixture of fats the edible fat preferably includes 38 to 70%, suitable 44 to 67% saturated fatty acids, 23 to 45%, suitable 26 to 41% monounsaturated fatty acids, and 2-23, suitable 4 to 17% polyunsaturated acids.

The saturated fatty acids is preferably selected from capric acid(10:0), lauric acid(12:0), myristic acid(14:0), palmitic acid(16:0), stearic acid(18:0), arachidic acid(20:0), docosanoic acid(22:0), lignoceric acid(24:0), and mixtures thereof. The saturated fatty acids may also comprise a minor amount of lower saturated fatty acids like e.g. butyric acid(4:0) and caproic acid(6:0).

The monounsaturated fatty acids is preferably selected from 9-dodecenoic acid(12:1(n-3)), 9-tetradecenoic acid or myrestoleic acid(14:1(n-5)), 9-hexadecenoic acid or palmitoleic acid(16:1(n-7)), 6-octadecenoic acid or petroselinic acid(18:1(n-12)), 9-octadecenoic acid or oleic acid(18:1(n-9)), 11-octadecenoic acid or vaccenic acid(18:1(n-7)), 9-eicosenoic acid(20:1(n-11)), 11-eicosenoic acid (20:1(n-9)), 13-docosenoic acid or eurucic acid(22:1(n-9)), 15-tetracosenoic acid or nervonic acid (24:1(n-9)), and mixtures thereof.

The polyunsaturated fatty acids is preferably selected from linoleic acid(18:2(N-6)), γ-linoleic acid(18:3(N-6)), homo-γ-linoleic acid (20:3 (N-6)), arachidonic acid (20:4(N-6), docasopentenoic acid(22:5(n-6)), α-linoleic acid(18:3(n-3)), eicsopentanoic acid(20:5(n-3)), docosahexanoic acid(22:6(n-3)), eicosatrienoic acid (20:3(n-9)) and mixtures thereof.

If desired one or more fatty acids may be added to the vegetable fat, butter and taste ingredient separately, before mixing

In a preferred embodiment of the method according to the invention at least one vegetable oil is added to the butter, edible vegetable fat, and taste ingredient prior to mixing. The vegetable oil or oils will contribute to the "softness" or spreadability of the butter-like dairy product at low temperatures. The vegetable oil is preferably selected from the group consisting of sunflower oil, corn oil, sesame oil, soya bean oil, palm oil, linseed oil, grapeseed oil, rapeseed oil, olive oil, groundnut oil and mixtures thereof. The preferred vegetable oils are oils that are relatively neutral in taste compared to butter.

According to the method the edible vegetable fat with a solid fat content not exceeding about 45% at 20°C is added to a mixer in an amount to constitute 7-38 wt%, preferably 9-29 wt% of the butter-like dairy spread based on the total weight of the dairy spread. The preferred amount of vegetable fat provides for a butter-like dairy spread with fine properties in respect of softness and mouth-feel.

Preferably the edible vegetable fat is added at a temperature in the range 7 to 16°C, suitable a temperature in the range 10 to 14°C prior to mixing. In this way undesired melting of the vegetable fat is avoided and, moreover, the vegetable fat contributes to keeping the temperature during mixing below 22°C, preferably below 20°C.

In a preferred embodiment of the method according to the invention the butter is added in an amount to constitute 32-68 wt%, suitable 35-65 wt% of the butter-like dairy spread based on the total weight of the dairy spread. Preferably the butter is added at a temperature in the range 7 to 16°C, suitable in the range 10 to 14°C prior to mixing to avoid undesired melting and to contribute to keep the temperature during mixing below 22°C. In order to obtain the butter-like character of the dairy spread the amount of butter is important. If the amount of butter is less than about 25 wt% the spread will loose its butter-like character. On the other hand, if the amount of butter becomes too high the dairy spread tends to be too hard at refrigerated temperatures, and it has been found that the amount of butter should preferably not exceed 68 wt%.

The taste ingredient is preferably added in an amount to constitute 3-35 wt%, suitable 5-28 wt% of the butter-like dairy spread based on the total weight of the dairy spread. As previously explained the taste ingredient may contain substantial amounts of water, which may contribute to the softness of the butter-like dairy spread, and as such the taste ingredient may not only add taste to the dairy spread, but also further softness. It is preferred that the taste ingredient is added with a temperature in the range 2 to 13°C, suitable with a temperature in the range 4 to 10°C prior to mixing to cool the butter-like dairy spread during mixing.

In case edible oil is added to the mixture of vegetable fat, butter and taste ingredient, the edible vegetable oil is preferable added in an amount to constitute 3-33 wt%, suitable 5-26 wt% of the butter-like dairy spread based on the total weight of the dairy spread. As mentioned the vegetable oil may contribute to further soften the butter-like dairy spread and the higher the content of butter the higher content of vegetable oil may be desirable.

Preferably edible vegetable oil is added with a temperature in the range 2 to 20°C, conveniently in the range 4 to 14°C prior to mixing to aid cooling of the butter-like dairy spread during mixing.

With the aim of avoiding artificial additives it is preferred that the butter-like dairy spread does not contain emulsifying agents or other artificial additives. Consequently, it is preferred that the butter-like dairy spread according to the invention only includes natural constituents.

In order to avoid undesired melting of vegetable fat and butter during mixing it is preferred that the mixing is carried out at a temperature below 22°C, suitable at a temperature below 20°C, and more preferably at a temperature in the range 14 to 19°C.

Moreover, for the purpose of avoiding undesired melting the butter-like dairy spread is subsequent to mixing cooled to a temperature below 16°C, preferably to a temperature in the range 3 to 14°C, more preferred to a temperature in the range 4 to 8°C

After the mixing, and optionally packaging, before delivery to supermarkets etc. for sale it is preferred that the butter-like dairy spread subsequent to mixing is cooled and stored at a temperature below 16°C, preferably at a temperature in the range 2 to 14°C, preferably at a temperature in the range 4 to 8°C for at least 24 hours. In this way the butter-like dairy spread will "ripen" and get a desired taste and texture due a finishing of solidification or crystallization of fat.

The invention further relates to a butter-like dairy spread comprising at least butter, edible vegetable fat, and a taste ingredient, in which the edible vegetable fat has a solid fat content in the range of 20-45% or less at 20°C, and the butter-like dairy spread has a solid fat content at 20°C of at least 15% when measured according to IUPAC 2.150a and wherein the taste ingredient includes water, skimmed milk-powder, salt, and one or more cultures of lactic bacteria. Such a dairy spread has proven to have brilliant properties in respect of mouth-feel and spreadability, in fact the butter-like dairy spread can be spread directly from a refrigerator (approx 5°C).

For the purpose of providing a balanced distribution of fats in the butter-like dairy spread according to the invention it is preferred that the edible fat includes 38-70%, suitable 44 to 67% saturated fatty acids, 23-45%, suitable 26 to 41% monounsaturated fatty acids, and 2-23%, suitable 4 to 17% polyunsaturated acids. Such a distribution of fatty acid in the edible fat provides an edible fat with good properties in respect of softening the butter-like dairy spread, while still keeping it stable at room temperature. Moreover, the distribution of fatty acids is also advantageously in respect of consumer health.

Consequently, the saturated fatty acids, the monounsaturated fatty acids and the polyunsaturated fatty acids preferably are selected from the fatty acids mentioned above.

In the butter-like dairy spread according to the invention the taste ingredient includes water, skimmed-milk powder, salt, and one more cultures of lactic bacteria. Thus, the taste ingredient comprises only natural substances, and provides a water phrase for butter-like dairy spread. The water phase, which is substantially clear water, may constitute 58-95 wt%, preferably 65-85 wt% of the taste ingredient solid milk substance preferably 1-8 wt%, more prefered 2-5 wt%, cultures of lactic bacteria preferably 2-20 wt%, more preferred 4-18 wt%, and salt suitable 0.5-4 wt%, preferably 1-3 wt%.

In order to obtain a characteristic similar to that of butter it is preferred that the butter-like dairy spread has a butter content so that butter constitutes 30-68 wt%, suitable 33-65 wt% of the butter-like dairy spread based on the total weight of the dairy spread. If the content of butter is below about 30 wt%, the dairy spread will loose to much of its butter-like characteristics. If the content of butter exceeds about 68 wt% the butter-like dairy spread tends to be too hard a lower temperatures (e.g. refrigerated temperatures).

Preferably the edible vegetable fat, constitutes 7-38 wt%, suitable 9-29 wt% of the butter-like dairy spread based on the total weight of the dairy spread.

Such an amount of vegetable fat is sufficient to provide both softness and stability to the butter-like dairy spread according to the invention.

Preferably the taste ingredient constitutes 3-35 wt%, suitable 5-28 wt% of the butter-like dairy spread based on the total weight of the dairy spread. The taste ingredient may provide both taste and water phase to the butter-like dairy spread according to the invention.

In an embodiment, which is particular preferred, the butter-like dairy spread further comprises at least one vegetable oil. A vegetable oil may contribute to softness and smoothness of the butter-like dairy spread.

Preferable the at least one vegetable oil is selected from sunflower oil, corn oil, sesame oil, soya been oil, palm oil, linseed oil, grapeseed oil, rapeseed oil, olive oil, groundnut oil and mixtures thereof.

For the purpose of obtaining a balanced distribution between butter, vegetable fat and vegetable oil in the butter-like dairy spread it is preferred that the edible vegetable oil, when present, constitutes 3-33 wt%, suitable 5-28 wt% of the butter-like dairy spread based on the total weight of the dairy spread. When the amount of vegetable oil is kept within the preferred limit the vegetable oil will contribute to further softness of the butter-like dairy spread without compromising the stability. In principal it is preferred to add higher amount of vegetable oil if the amount of butter is high.

The invention will now be described in further details with reference to a preferred embodiment and a drawing, in which
- Fig. 1: depicts a schematic flow-sheet for manufacture of butter-like dairy spread according to the invention.
- Fig. 2: depicts a schematic flow-sheet for manufacture of butter-like dairy according to the invention including addition of oil.

Unless other stated, all percentages % are weight percentage wt%.

Butter is an water-in-oil emulsion, comprising >80% milkfat, but also containing water in the form of tiny droplets, perhaps some milk solids-non-fat, with or without salt; texture is a result of working/kneading during processing at appropriate temperatures, to establish fat crystalline network that results in desired smoothness; butter is used as a spread, a cooking fat, or a baking ingredient. Butter of good quality can be obtained from various creameries.

Vegetable fat is a fat extracted from plants. A fat has a solid appearance a normal room temperature (18-25°C). The fat may include fat in liquid form, optionally within the solid fat as tiny droplets. Suitable edible vegetable fats are e.g. vegetable fats based on palm oil and palm kernel oil (which can be delivered from e.g. American Palm Oil Council; United States, or from Aarhus United; Denmark). Vegetable fats based on palm oil and palm kernel oil are at present preferred, however, other vegetable fats with similar properties may be also be suitable, e.g. vegetable fats like peanut butter, cacao butter or coconut butter.

In respect of stability the dairy spread should have substantially the same appearance as butter, in respect of exuding oily substances, after being kept at 22°C for two hours.

The taste ingredient may be any taste ingredient that provides a butter-like taste, e.g. sourness to the dairy spread. The taste ingredient, however, includes skimmed milk-powder, one or more cultures of lactic bacteria, salt and water. Skimmed milk-powder and lactic bacteria may be obtained from Danisco A/S; Denmark.

Vegetable oil is based on fatty substances extracted from plants. However, in contrast to vegetable fats, vegetable oil is in liquid form at normal room temperatures (18-25°C). Suitable edible vegetable oils are vegetable oils that are substantially neutral in taste, like e.g. rapeseed oil, linseed oil, corn oil and sunflower oil, which can be obtained from wide range of suppliers (e.g. Aarhus united, Denmark).

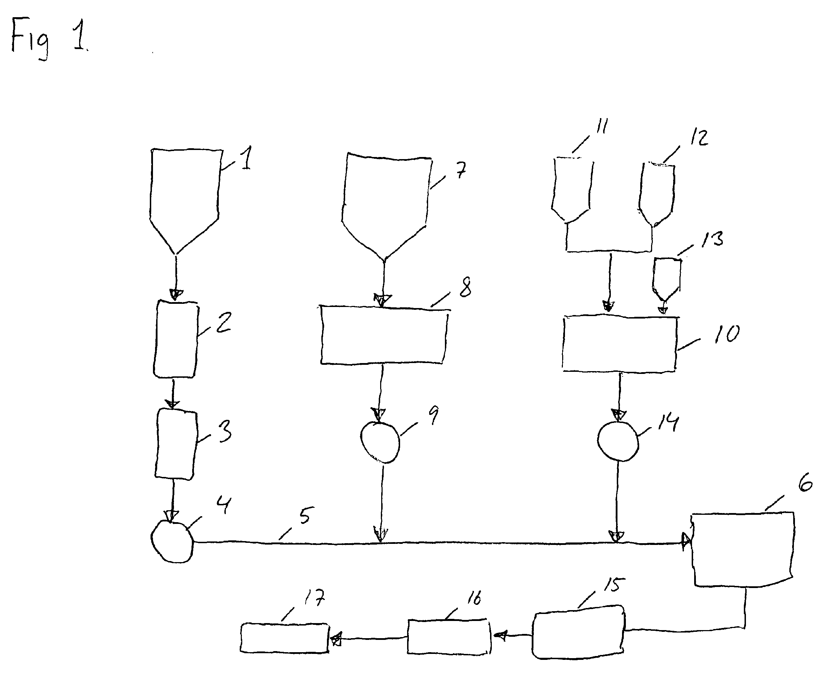

With reference to figure 1 edible vegetable fat kept above its melting point (45-55°C) in a tank 1 is feed to a cooler and crystallization unit 2 where the fat is cooled to below 15°C to at least partly solidify or crystallize to obtain vegetable fat in solid form. The vegetable fat remains in the unit 2 for about 15 seconds to 20 minutes. From the unit 2 the vegetable fat is led to a post-crystallizing unit 3 for further crystallizing at a temperature in the range of approx. 7 to 18°C. The vegetable fat, at least partly on solid or crystallized form, is led to a pump 4, which via pipe 5 feeds the vegetable fat to mixer 6.

Simultaneously, butter in container 7 with a temperature in the range 7 to 16°C is filled into a stirrer 8 before it via pump 9 and pipe 5 is feed tb mixer 6. From tank 10 taste ingredient, which comprise water and skimmed-milk powder with added cultures of lactic bacteria 11, 12 and salt 13 is feed to the mixer 6 via pump 14 and pipe 5. The taste ingredient is feed to the mixer 6 with a temperature in the range 2-13°C.

In the mixer 6 the edible vegetable fat is mixed with butter and taste ingredient at a temperature below 22°C to form butter-like dairy spread.

After the mixing the butter-like dairy spread is conveyed through a cooler 15, which cools the butter-like dairy spread to a temperature below 16°C. Then the butter-like dairy spread is conveyed to a packing station 16 for packing. Finally, before the butter-like dairy spread is send to supermarkets etc. for sale and consuming, the packed butter-like dairy spread is stored in a storage 17 at a temperature below 16°C for at least 24 hours for ripening.

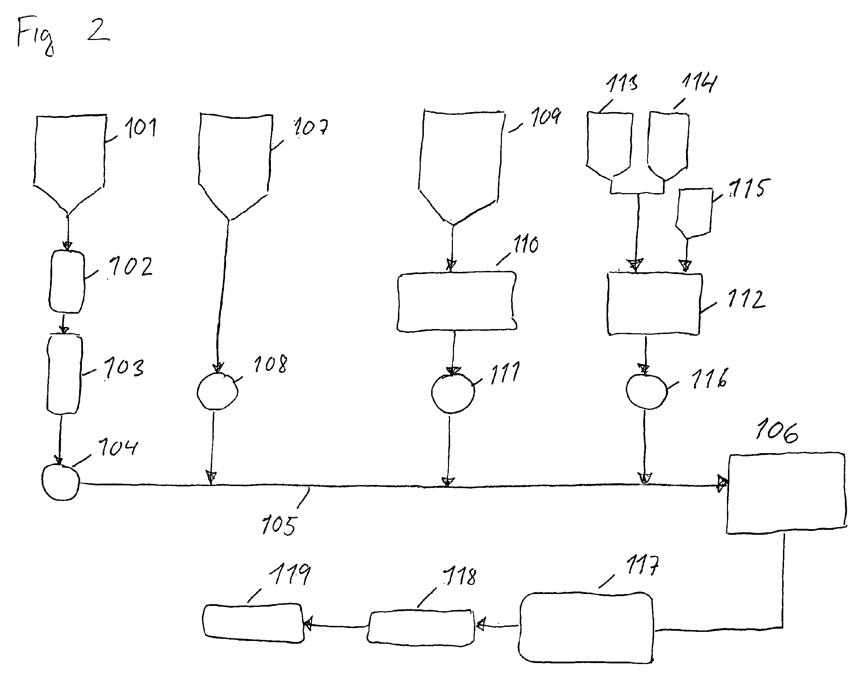

In an alternative embodiment outlined in figure 2, edible vegetable fat kept above its melting point (45-55°C) in a tank 101 is feed to a cooler and crystallization unit 102 where the fat is cooled to below 15°C to at least partly solidify or crystallize to obtain vegetable fat in solid form. The vegetable fat remains in the unit 102 for about 15 seconds to 20 minutes. From the unit 102 the vegetable fat is led to a post-crystallizing unit 103 for further crystallizing at a temperature in the range of approx. 7 to 18°C. The vegetable fat, at least partly on solid or crystallized form, is led to a pump 104, which via pipe 105 feeds the vegetable fat to mixer 106.

Simultaneously, edible vegetable oil from tank 107 with a temperature in the range 2-20°C is feed to the mixer 106 via pump 108 and pipe 105. Butter in container 109 with a temperature in the range 7 to 16°C is filled into a stirrer 110 before it via pump 111 and pipe 105 is feed to mixer 106. From tank 112 taste ingredient, which comprise water and skimmed milk powder with added cultures of lactic bacteria 113, 114 and salt 115 is feed to the mixer 106 via pump 116 and pipe 105. The taste ingredient is feed to the mixer 106 with a temperature in the range 2-13°C.

In the mixer 106 the edible vegetable fat is mixed with edible vegetable oil, butter and taste ingredient at a temperature below 22°C to form butter-like dairy spread.

After the mixing the butter-like dairy spread is conveyed through a cooler 117, which cools the butter-like dairy spread to a temperature below 16°C. Then the butter-like dairy spread is conveyed to a packing station 118 for packing. Finally, before the butter-like dairy spread is send to supermarkets etc. for sale and consuming, the packed butter-like dairy spread is stored in a storage 119 at a temperature below 16°C for at least 24 hours for ripening.

The flow-sheets depicted in fig. 1 and fig 2 only describes preferred embodiments. It is clear that is it possible to exclude the pipe 5, 105, as the ingredients can be feed directly to the mixer 6, 106. The means for adding taste ingredient 10, 11, 12, 13, 112, 113, 114, 115 may have a different configuration if other taste ingredients are used. Finally, number of mixers 6, 106 may vary from 1 to 2 or 3 or more, depending on the capacity of the mixer applied. Thus, more mixers may be used in series, although it may be considered as only one mixing step as all components of the dairy spread are present form the beginning to the end of the mixing.

### Examples

Butter-like dairy spreads according to the invention is produced with the following constituents:
Butter in the form of regular dairy butter from creamery.
Vegetable fat based on palm oil from Aarhus United, with the following characteristic (according to IUPAC 2.150a) :

| | |
|---|---|
| solid fat content at 10°C | approx. 60% |
| solid fat content at 20°C | approx. 30% |
| solid fat content at 30°C | approx. 10% |

Vegetable oil; rapeseed oil from Aarhus United.
Taste ingredient; skimmed milk powder and cultures of lactic bacteria from Danisco:

| | |
|---|---|
| Water | 78% |
| Salt | 3% |
| Skimmed milk powder | 14% |
| Lactic bacteria | 5% |

### Example 1

Dairy spreads are produced according to the method outlined in figure 1.

### Composition 1:

| | |
|---|---|
| Butter | 56% |
| Vegetable fat | 26% |
| Taste ingredient | 18% |

### Composition 2:

| | |
|---|---|
| Butter | 50% |
| Vegetable fat | 25% |
| Taste ingredient | 25% |

The resulting dairy spreads have texture and taste like butter and can be spread on white bread when taken from a refrigerated temperature of approx. 5°C.

### Example 2

Dairy spreads are produced according to the method outlined in figure 2.

### Composition 3:

| | |
|---|---|
| Butter | 56% |
| Vegetable fat | 15% |
| Vegetable oil | 15% |
| Taste ingredient | 14% |

### Composition 4:

| | |
|---|---|
| Butter | 48% |
| Vegetable fat | 16% |
| Vegetable oil | 16% |
| Taste ingredient | 20% |

The resulting dairy spreads have texture and taste like butter and can be spread on white bread when taken from a refrigerated temperature of approx. 5°C. Although composition 4 contains less than 50% butter and a substantial amount of water it still has a butter-like appearance and texture when produced according to the invention.

## Claims

1. A method for producing a butter-like dairy spread comprising at least butter, edible vegetable fat, and a taste ingredient, in which the edible vegetable fat has a solid fat content of 45% or less at 20°C, said edible vegetable fat is mixed with at least butter and said taste ingredient at a temperature below 22°C during the production of said butter-like dairy spread, and wherein the taste ingredient includes water, skimmed milk-powder, salt, and one or more cultures of lactic bacteria.

2. A method according to claim 1, wherein said edible vegetable fat is supplied on liquid form at a temperature in the range of 42-60°C and rapidly cooled prior to said mixing to a temperature in the range 7-18°C to crystallize, preferably the edible vegetable fat is crystallized and postcrystallized within a period of time in the range from 2 to 30 min.

3. A method according to any one of claims 1 and 2, wherein said edible vegetable fat has a solid fat content when measured according to IUPAC 2.150a:
| | |
|---|---|
| solid fat content at 10°C | 50-70% |
| solid fat content at 20°C | 30-45% |
| solid fat content at 30°C | 10-20% |
| solid fat content at 40°C | <3%. |

4. A method according to any one of the preceding claims, wherein said edible vegetable fat is substantially free of trans fatty acid.

5. A method according to any one of the preceding claims, wherein said edible fat includes 44 to 67% saturated fatty acids, 26 to 41% monounsaturated fatty acids, and 4 to 17% polyunsaturated acids.

6. A method according to any one of the preceding claims, wherein at least one vegetable oil is added to the edible vegetable fat, butter and taste ingredient prior to mixing.

7. A method according to claim 6, wherein said vegetable oil is selected from the group consisting of sunflower oil, corn oil, sesame oil, soya been oil, palm oil, linseed oil, grapeseed oil, rapeseed oil, olive oil, groundnut oil and mixtures thereof.

8. A method according to any one of the preceding claims, wherein the edible vegetable fat is added in an amount to constitute 7-38 wt% of the butter-like dairy spread based on the total weight of the dairy spread.

9. A method according to any one of the preceding claims, wherein the edible vegetable fat is added with a temperature in the range 7 to 16°C prior to mixing.

10. A method according to any one of the preceding claims, wherein the butter is added in an amount to constitute 32-68 wt% of the butter-like dairy spread based on the total weight of the dairy spread.

11. A method according to any one of the preceding claims, wherein the butter is added with a temperature in the range 7 to 16°C prior to mixing.

12. A method according to any one of the preceding claims, wherein the taste ingredient is added in an amount to constitute 3-35 wt% of the butter-like dairy spread based on the total weight of the dairy spread.

13. A method according to any one of the preceding claims, wherein the taste ingredient is added with a temperature in the range 2 to 13°C prior to mixing.

14. A method according to any one of the claims 6 to 13, wherein the edible vegetable oil is added in an amount to constitute 3-33 wt% of the butter-like dairy spread based on the total weight of the dairy spread.

15. A method according to any one of the preceding claims 6 to 14, wherein the edible vegetable oil is added with a temperature in the range 2 to 20°C prior to mixing

16. A method according to any one of the preceding claims, wherein the butter-like dairy spread does not contain emulsifying additives.

17. A method according to any one of the preceding claims, wherein the mixing is carried out at a temperature below 20°C, preferably at a temperature in the range 14 to 19°C

18. A method according to any one of the preceding claims, wherein the butter-like dairy spread subsequent to mixing is cooled to a temperature below 16°C, preferably to a temperature in the range 4 to 14°C.

19. A method according to any one of the preceding claims, wherein the butter-like dairy spread subsequent to mixing is cooled and stored at a temperature below 16°C, preferably at a temperature in the range 2 to 14°C, for at least 24 hours.

20. A method according to any one of the preceding claims, wherein the butter, edible vegetable fat and optionally vegetable oil constitutes at least 59%, preferably at least 65% of the butter-like dairy spread.

21. A butter-like dairy spread comprising at least butter, edible vegetable fat, and a taste ingredient, in which the edible vegetable fat has a solid fat content in the range of 20-45% at 20°C, and the butter-like dairy spread has a solid fat content at 20°C of at least 15% when measured according to IUPAC 2.150a, and wherein the taste ingredient includes water, skimmed milk-powder, salt, and one or more cultures of lactic bacteria.

22. A butter-like dairy spread according to claim 21, wherein said edible fat includes 44 to 67% saturated fatty acids, 26 to 41% monounsaturated fatty acids, and 4 to 17% polyunsaturated acids.

23. A butter-like dairy spread according to any one of the preceding claims 21-22, wherein the butter constitutes 30-68 wt% of the butter-like dairy spread based on the total weight of the dairy spread.

24. A butter-like dairy spread according to any one of the preceding claims 21-23, wherein the edible vegetable fat form constitutes 7-38 wt% of the butter-like dairy spread based on the total weight of the dairy spread.

25. A butter-like dairy spread according to any one of the preceding claims 21-24, wherein the taste ingredient constitutes 3-35 wt% of the butter-like dairy spread based on the total weight of the dairy spread.

26. A butter-like dairy spread according any one of the preceding claims 21-25, wherein said butter-like dairy spread further comprises at least one vegetable oil.

27. A butter-like dairy spread according to claim 26, wherein said vegetable oil is selected from the group consisting of sunflower oil, corn oil, sesame oil, soya been oil, palm oil, linseed oil, grapeseed oil, rapeseed oil, olive oil, groundnut oil and mixtures thereof.

28. A butter-like dairy spread according to claim 26 or 27, wherein the edible vegetable oil, when present, constitutes 3-33 wt% of the butter-like dairy spread based on the total weight of the dairy spread.

## Patentansprüche

1. Verfahren zur Herstellung eines butterartigen Milchstreichfettes, das zumindest Butter, essbares Pflanzenfett und einen Geschmacksbestandteil umfasst, wobei das essbare Pflanzenfett einen Gehalt an festem Fett von 45 % oder weniger bei 20°C aufweist, das essbare Pflanzenfett mit zumindest Butter und dem Geschmacksbestandteil während der Herstellung des butterartigen Milchstreichfettes bei einer Temperatur unterhalb 22°C vermischt wird, und wobei der Geschmacksbestandteil Wasser, Magermilchpulver, Salz und eine oder mehrere Milchsäurebakterienkulturen einschliesst.

2. Verfahren gemäss Anspruch 1, wobei das essbare Pflanzenfett bei einer Temperatur im Bereich von 42 bis 60°C in flüssiger Form bereitgestellt und vor dem Vermischen schnell auf eine Temperatur im Bereich von 7 bis 18°C gekühlt wird, um zu kristallisieren, vorzugsweise wird das essbare Pflanzenfett innerhalb eines Zeitraums im Bereich von 2 bis 30 Minuten kristallisiert und nachkristallisiert.

3. Verfahren gemäss irgendeinem der Ansprüche 1 und 2, wobei das essbare Pflanzenfett einen Gehalt an festem Fett aufweist, der gemäss IUPAC 2.150a bestimmt wird:
| | |
|---|---|
| Gehalt an festem Fett bei 10°C | 50 bis 70 % |
| Gehalt an festem Fett bei 20°C | 30 bis 45 % |
| Gehalt an festem Fett bei 30°C | 10 bis 20 % |
| Gehalt an festem Fett bei 40°C | <3 %. |

4. Verfahren gemäss irgendeinem der vorstehenden Ansprüche, wobei das essbare Pflanzenfett im wesentlichen frei von Transfettsäuren ist.

5. Verfahren gemäss irgendeinem der vorstehenden Ansprüche, wobei das essbare Fett 44 bis 67 % gesättigte Fettsäuren, 26 bis 41 % mono-ungesättigte Fettsäuren und 4 bis 17 % poly-ungesättigte Säuren einschliesst.

6. Verfahren gemäss irgendeinem der vorstehenden Ansprüche, wobei zumindest ein Pflanzenöl vor dem Zusammenmischen zu dem essbaren Pflanzenfett, Butter und Geschmacksbestandteil hinzugefügt wird.

7. Verfahren gemäss Anspruch 6, wobei das Pflanzenöl aus der Gruppe bestehend aus Sonnenblumenöl, Maisöl, Sesamöl, Sojabohnenöl, Palmöl, Leinsamenöl, Traubenkernöl, Rapsöl, Olivenöl, Erdnussöl und Mischungen davon ausgewählt ist.

8. Verfahren gemäss irgendeinem der vorstehenden Ansprüche, wobei das essbare Pflanzenfett in einer Menge zugegeben wird, die 7 bis 38 Gew.% des butterartigen Milchstreichfettes, basierend auf dem Gesamtgewicht des Milchstreichfettes, ausmacht.

9. Verfahren gemäss irgendeinem der vorstehenden Ansprüche, wobei das essbare Pflanzenfett bei einer Temperatur im Bereich von 7 bis 16°C vor dem Vermischen hinzugefügt wird.

10. Verfahren gemäss irgendeinem der vorstehenden Ansprüche, wobei die Butter in einer Menge hinzugefügt wird, die 32 bis 68 Gew.% des butterartigen Milchstreichfettes, basierend auf dem Gesamtgewicht des Milchstreichfettes, ausmacht.

11. Verfahren gemäss irgendeinem der vorstehenden Ansprüche, wobei die Butter bei einer Temperatur im Bereich von 7 bis 16°C vor dem Vermischen hinzugefügt wird.

12. Verfahren gemäss irgendeinem der vorstehenden Ansprüche, wobei der Geschmacksbestandteil in einer Menge hinzugefügt wird, die 3 bis 35 Gew.% des butterartigen Milchstreichfettes, basierend auf dem Gesamtgewicht des Milchstreichfettes, ausmacht.

13. Verfahren gemäss irgendeinem der vorstehenden Ansprüche, wobei der Geschmacksbestandteil bei einer Temperatur im Bereich von 2 bis 13°C vor dem Vermischen hinzugefügt wird.

14. Verfahren gemäss irgendeinem der Ansprüche 6 bis 13, wobei das essbare Pflanzenöl in einer Menge hinzugefügt wird, die 3 bis 33 Gew.% des butterartigen Milchstreichfettes, basierend auf dem Gesamtgewicht des Milchstreichfettes, ausmacht.

15. Verfahren gemäss irgendeinem der vorstehenden Ansprüche 6 bis 14, wobei das essbare Pflanzenöl bei einer Temperatur im Bereich von 2 bis 20°C vor dem Vermischen hinzugefügt wird.

16. Verfahren gemäss irgendeinem der vorstehenden Ansprüche, wobei das butterartige Milchstreichfett keine emulgierenden Additive enthält.

17. Verfahren gemäss irgendeinem der vorstehenden Ansprüche, wobei das Vermischen bei einer Temperatur unterhalb 20°C, bevorzugt bei einer Temperatur im Bereich von 14 bis 19°C, durchgeführt wird.

18. Verfahren gemäss irgendeinem der vorstehenden Ansprüche, wobei das butterartige Milchstreichfett nach dem Vermischen auf eine Temperatur unterhalb 16°C, bevorzugt auf eine Temperatur im Bereich von 4 bis 14°C, gekühlt wird.

19. Verfahren gemäss irgendeinem der vorstehenden Ansprüche, wobei das butterartige Milchstreichfett nach dem Vermischen bei einer Temperatur unterhalb 16°C, bevorzugt bei einer Temperatur im Bereich von 2 bis 14°C, für mindestens 24 Stunden gekühlt und gelagert wird.

20. Verfahren gemäss irgendeinem der vorstehenden Ansprüche, wobei die Butter, das essbare Pflanzenfett und gegebenenfalls das Pflanzenöl zumindest 59 %, bevorzugt zumindest 65 %, des butterartigen Milchstreichfettes ausmachen.

21. Butterartiges Milchstreichfett, das zumindest Butter, essbares Pflanzenfett und einen Geschmacksbestandteil umfasst, wobei das essbare Pflanzenfett einen Gehalt an festem Fett im Bereich von 20 bis 45 % bei 20°C aufweist und das butterartige Milchstreichfett einen Gehalt an festem Fett von zumindest 15 % bei 20°C aufweist, der gemäss IUPAC 2.150a bestimmt wird, und wobei der Geschmacksbestandteil Wasser, Magermilchpulver, Salz und eine oder mehrere Milchsäurebakterienkulturen einschliesst.

22. Butterartiges Milchstreichfett gemäss Anspruch 21, wobei das essbare Fett 44 bis 67 % gesättigte Fettsäuren, 26 bis 41 % mono-ungesättigte Fettsäuren und 4 bis 17 % poly-ungesättigte Säuren einschliesst.

23. Butterartiges Milchstreichfett gemäss irgendeinem der vorstehenden Ansprüche 21 bis 22, wobei die Butter 30 bis 68 Gew.% des butterartigen Milchstreichfettes, basierend auf dem Gesamtgewicht des Milchstreichfettes, ausmacht.

24. Butterartiges Milchstreichfett gemäss irgendeinem der vorstehenden Ansprüche 21 bis 23, wobei die essbare Pflanzenfettform 7 bis 38 Gew.% des butterartigen Milchstreichfettes, basierend auf dem Gesamtgewicht des Milchstreichfettes, ausmacht.

25. Butterartiges Milchstreichfett gemäss irgendeinem der vorstehenden Ansprüche 21 bis 24, wobei der Geschmacksbestandteil 3 bis 35 Gew.% des butterartigen Milchstreichfettes, basierend auf dem Gesamtgewicht des Milchstreichfettes, ausmacht.

26. Butterartiges Milchstreichfett gemäss irgendeinem der vorstehenden Ansprüche 21 bis 25, wobei das butterartige Milchstreichfett ferner zumindest ein Pflanzenöl umfasst.

27. Butterartiges Milchstreichfett gemäss Anspruch 26, wobei das Pflanzenöl aus der Gruppe bestehend aus Sonnenblumenöl, Maisöl, Sesamöl, Sojabohnenöl, Palmöl, Leinsamenöl, Traubenkernöl, Rapsöl, Olivenöl, Erdnussöl und Mischungen davon ausgewählt ist.

28. Butterartiges Milchstreichfett gemäss Anspruch 26 oder 27, wobei das essbare Pflanzenöl, falls vorhanden, 3 bis 33 Gew.% des butterartigen Milchstreichfettes, basierend auf dem Gesamtgewicht des Milchstreichfettes, ausmacht.

## Revendications

1. Procédé de production d'une pâte à tartiner semblable au beurre comportant au moins du beurre, de la matière grasse végétale comestible et un ingrédient de saveur, dans lequel la matière grasse végétale comestible présente une teneur en matière grasse solide de 45% ou moins à 20°C, dans lequel ladite matière grasse végétale comestible est mélangée avec le au moins dit beurre et ledit ingrédient de saveur à une température inférieure à 22°C pendant la production de ladite pâte à tartiner semblable au beurre, et dans lequel l'ingrédient de saveur comporte de l'eau, de la poudre de lait écrémée, du sel, et une ou plusieurs culture(s) de bactéries lactiques.

2. Procédé selon la revendication 1, dans lequel ladite matière grasse végétale comestible est fournie sous une forme liquide à une température située dans la plage de 42 à 60°C et refroidie rapidement avant ledit mélange à une température se situant dans la plage de 7 à 18°C pour cristalliser, de préférence la matière grasse végétale comestible est cristallisée et post-cristallisée dans un laps de temps allant de 2 à 30 min.

3. Procédé selon l'une quelconque des revendications 1 et 2, dans lequel ladite matière grasse végétale comestible présente une teneur en matière grasse solide, lorsque mesurée selon la méthode IUPAC 2.150a :
teneur en matière grasse solide à 10°C 50 - 70%
teneur en matière grasse solide à 20°C 30 - 45%
teneur en matière grasse solide à 30°C 10 - 20%
teneur en matière grasse solide à 40°C < 3%.

4. Procédé selon l'une quelconque des revendications précédentes, dans lequel ladite matière grasse végétale comestible est essentiellement dépourvue d'acide gras trans.

5. Procédé selon l'une quelconque des revendications précédentes, dans lequel ladite matière grasse comestible comprend 44 à 67% d'acides gras saturés, 26 à 41% d'acides gras mono-insaturés et 4 à 17% d'acides polyinsaturés.

6. Procédé selon l'une quelconque des revendications précédentes, dans lequel au moins une huile végétale est ajoutée à la matière grasse végétale comestible, au beurre et à l'ingrédient de saveur avant le mélange.

7. Procédé selon la revendication 6, dans lequel ladite huile végétale est sélectionnée à partir du groupe constitué d'huile de tournesol, d'huile de maïs, d'huile de sésame, d'huile de graines de soja, d'huile de palme, d'huile de lin, d'huile de raisin, d'huile de colza, d'huile d'olive, d'huile d'arachide et de leurs mélanges.

8. Procédé selon l'une quelconque des revendications précédentes, dans lequel ladite matière grasse comestible est ajoutée en quantité telle qu'elle constitue 7 à 38% en poids de la pâte à tartiner semblable au beurre sur la base du poids total de la pâte à tartiner.

9. Procédé selon l'une quelconque des revendications précédentes, dans lequel ladite matière grasse comestible est ajoutée à une température se situant dans la plage de 7 à 16°C avant le mélange.

10. Procédé selon l'une quelconque des revendications précédentes, dans lequel le beurre est ajouté dans une quantité telle qu'il constitue 32 à 68% en poids de la pâte à tartiner semblable au beurre sur la base du poids total de la pâte à tartiner.

11. Procédé selon l'une quelconque des revendications précédentes, dans lequel le beurre est ajouté à une température se situant dans la plage de 7 à 16°C avant le mélange.

12. Procédé selon l'une quelconque des revendications précédentes, dans lequel l'ingrédient de saveur est ajouté dans une quantité telle qu'il constitue 3 à 35% en poids de la pâte à tartiner semblable au beurre sur la base du poids total de la pâte à tartiner.

13. Procédé selon l'une quelconque des revendications précédentes, dans lequel l'ingrédient de saveur est ajouté à une température se situant dans la plage de 2 à 13°C avant le mélange.

14. Procédé selon l'une des revendications 6 à 13, dans lequel l'huile végétale comestible est ajoutée dans une quantité telle qu'elle constitue 3 à 33% en poids de la pâte à tartiner semblable au beurre sur la base du poids total de la pâte à tartiner.

15. Procédé selon l'une quelconque des revendications précédentes 6 à 14, dans lequel l'huile végétale comestible est ajoutée à une température se situant dans la plage de 2 à 20°C avant le mélange.

16. Procédé selon l'une quelconque des revendications précédentes, dans lequel la pâte à tartiner semblable au beurre ne contient pas d'additifs émulsifiants.

17. Procédé selon l'une quelconque des revendications précédentes, dans lequel le mélange est réalisé à une température inférieure à 20°C, de préférence à une température située dans la plage de 14 à 19°C.

18. Procédé selon l'une quelconque des revendications précédentes, dans lequel la pâte à tartiner semblable au beurre postérieure au mélange est refroidie à une température inférieure à 16°C, de préférence, à une température située dans la plage de 4 à 14°C.

19. Procédé selon l'une quelconque des revendications précédentes, dans lequel la pâte à tartiner semblable au beurre postérieure au mélange est refroidie et stockée à une température inférieure à 16°C, de préférence à une température située dans la plage de 2 à 14°C, pendant au moins 24 heures.

20. Procédé selon l'une quelconque des revendications précédentes, dans lequel le beurre, la matière grasse végétale comestible et, facultativement, l'huile végétale, constituent au moins 59%, de préférence au moins 65%, de la pâte à tartiner semblable au beurre.

21. Pâte à tartiner semblable au beurre comportant au moins du beurre, de la matière grasse végétale comestible, et un ingrédient de saveur, dans laquelle la matière grasse végétale comestible présente une teneur en matière grasse solide se situant dans la plage de 20 à 45% à 20°C, et la pâte à tartiner semblable au beurre présente une teneur en matière grasse solide à 20°C d'au moins 15% lorsque mesurée selon la méthode IUPAC 2.150a, et dans laquelle l'ingrédient de saveur comprend de l'eau, de la poudre de lait écrémé, du sel, et une ou plusieurs culture(s) de bactéries lactiques.

22. Pâte à tartiner semblable au beurre selon la revendication 21, dans laquelle ladite matière grasse comestible comporte 44 à 67% d'acides gras saturés, 26 à 41% d'acides gras mono-insaturés et 4 à 17% d'acides polyinsaturés.

23. Pâte à tartiner semblable au beurre selon l'une quelconque des revendications précédentes 21-22, dans laquelle le beurre constitue 30 à 68% en poids de la pâte à tartiner semblable au beurre sur la base du poids total de la pâte à tartiner.

24. Pâte à tartiner semblable au beurre selon l'une quelconque des revendications précédentes 21-23, dans laquelle l'état de matière grasse végétale comestible constitue de 7 à 38% en poids de la pâte à tartiner semblable au beurre sur la base du poids total de la pâte à tartiner.

25. Pâte à tartiner semblable au beurre selon l'une quelconque des revendications précédentes 21-24, dans laquelle l'ingrédient de saveur constitue de 3 à 35% en poids de la pâte à tartiner semblable au beurre sur la base du poids total de la pâte à tartiner.

26. Pâte à tartiner semblable au beurre selon l'une quelconque des revendications précédentes 21-25, dans laquelle ladite pâte à tartiner semblable au beurre comprend, de plus, au moins une huile végétale.

27. Pâte à tartiner semblable au beurre selon la revendication 26, dans laquelle ladite huile végétale est sélectionnée à partir du groupe constitué d'huile de tournesol, d'huile de maïs, d'huile de sésame, d'huile de soja, d'huile de palme, d'huile de lin, d'huile de raisin, d'huile de colza, d'huile d'olive, d'huile d'arachide et de leurs mélanges.

28. Pâte à tartiner semblable au beurre selon la revendication 26 ou 27, dans laquelle l'huile végétale comestible, lorsqu'elle est présente, constitue 3 à 33% en poids de la pâte à tartiner semblable au beurre sur la base du poids total de la pâte à tartiner.
